# EUROPÄISCHE PATENTSCHRIFT

(11) **EP 3 133 004 B1**
(45) Veröffentlichungstag und Bekanntmachung des Hinweises auf die Patenterteilung: **19.12.2018**
(21) Anmeldenummer: 16178878.1
(22) Anmeldetag: 11.07.2016
(51) Int. Cl.: B62J 13/04

(54) **ANTRIEB, INSBESONDERE FÜR EIN FAHRRAD**
DRIVE UNIT, IN PARTICULAR FOR A BICYCLE
UNITÉ D'ENTRAÎNEMENT, EN PARTICULIER POUR UNE BICYCLETTE

(30) Priorität: 13.08.2015 DE 102015113391
(43) Veröffentlichungstag der Anmeldung: 22.02.2017
(73) Patentinhaber: Hebie GmbH & Co. KG, 33617 Bielefeld (DE)
(72) Erfinder: SCHREIBER, Bodo, 34513 Waldeck (DE)
(74) Vertreter: Dantz, Jan Henning

(56) Entgegenhaltungen:
- JP-U- S4 852 246
- US-A- 618 945

## Beschreibung

Die vorliegende Erfindung betrifft ein Antrieb, insbesondere für ein Fahrrad, mit einem Zahnkranz, einer Antriebskette und einer Schutzabdeckung nach dem Oberbegriff des Anspruches 1.

Die JP S48 52246 U offenbart eine Antriebseinrichtung.

Die CH 179 633 offenbart einen Kettenschutz für Fahrräder, bei dem eine Hülle aus Gummi um eine Antriebskette angeordnet ist. Die schlauchförmige Hülle dient dem Schutz der Kette vor Verunreinigungen, bildet allerdings keinen Eingriffsschutz aus, so dass ein Bereich des Zahnkranzes, in dem die Kette auf den Zahnkranz aufläuft, ein Risiko darstellt.

Ein ähnlicher Kettenschutz ist in der DE 10 2008 031 803 B4 gezeigt, bei dem um eine Antriebskette ein Wellrohrabschnitt angeordnet ist, der die Antriebskette rohrförmig umgibt. Auch hier kann ein Benutzer einen Gegenstand oder ein Körperteil in den Spalt zwischen die Antriebskette und den Zahnkranz bringen, so dass eine Verletzungsgefahr vorhanden ist, was gerade für Kinderfahrräder vermieden werden soll. Einen schlauchförmigen Kettenschutz aus einem elastischen Material zeigt auch die US 618 945 A, die einen Antrieb gemäß dem Oberbegriff des Anspruchs 1 offenbart.

Aus der DE 37 27 839 A1 ist eine Abdeckeinrichtung für Fahrradantriebsketten bekannt, bei der keine rohrförmigen Abdeckelemente, sondern einzelne clipförmige Abdeckelemente vorgesehen sind, die an den Kettengliedern fixierbar sind. Ein Eingriffsschutz kann mit dieser Abdeckeinrichtung nicht bereitgestellt werden.

Die EP 1 795 440 offenbart einen Schutzmantel zum Schutz der Antriebskette eines Fahrrades, bei dem sowohl das Antriebsritzel als auch die Antriebskette von dem Schutzmantel umhüllt sind. Bei einem solchen Schutzmantel ist nachteilig, dass für unterschiedlich große Zahnkränze jeweils unterschiedliche Schutzmäntel bereitgehalten werden müssen. Bei einer Änderung der Zähnezahl an einem Zahnkranz oder des Abstandes der beiden Zahnkränze müssen unterschiedliche Schutzmäntel bereitgehalten werden, was vergleichsweise aufwändig ist.

Es ist daher Aufgabe der vorliegenden Erfindung, einen Antrieb mit einer Schutzabdeckung für die Antriebskette zu schaffen, die flexibel an unterschiedliche Größen von Zahnkränzen anpassbar ist und ein hohes Maß an Sicherheit gewährleistet.

Diese Aufgabe wird mit einem Antrieb mit einer Schutzabdeckung für eine Antriebskette mit den Merkmalen des Anspruches 1 gelöst.

Erfindungsgemäß weist die Schutzabdeckung zunächst eine Vielzahl von Schutzelementen auf, die die Antriebskette umgreifen und zusammen mit der Antriebskette bewegbar sind. Dadurch ist die Kette an einer Außenseite und gegenüberliegenden Seitenflächen geschützt angeordnet, insbesondere gegen eine Verschmutzung. Zusätzlich ist mindestens ein stationäres Abdeckelement vorgesehen, das einen Spalt zwischen einem Zahnkranz und der Antriebskette abdeckt. Dadurch wird durch das stationäre Abdeckelement ein Eingriffsschutz bereitgestellt, der verhindert, dass Gegenstände oder Körperteile in den Spalt zwischen Zahnkranz und Antriebskette eingefügt werden, was insbesondere dann kritisch ist, wenn die Antriebskette bewegt wird, da in dem keilförmigen Spalt Gegenstände oder Körperteile zwischen der Antriebskette und dem Zahnkranz eingeklemmt werden können. Dies wird durch das stationäre Abdeckelement vermieden, so dass ein erhöhtes Maß an Sicherheit durch die Schutzabdeckung vorhanden ist.

Als Schutzelemente um die Antriebskette können sowohl schlauchförmige Schutzelemente vorgesehen sein, die auch integral miteinander ausgebildet sein können und insofern nur ein einziges zusammenhängendes Schutzelement bilden, oder getrennte Schutzelemente, die an der Antriebskette fixiert werden, beispielsweise an einzelnen Gliedern.

Vorzugsweise deckt das mindestens eine Abdeckelement sowohl einen Spalt an einem Zulauf der Antriebskette auf den Zahnkranz als auch einen Spalt an einem Ablauf der Antriebskette von dem Zahnkranz ab. Da die Antriebskette sich gerade bei Fahrrädern in unterschiedliche Richtungen bewegen kann, wird durch das Abdeckelement sowohl der Spalt an einem Zulauf als auch der Spalt an einem Ablauf der Antriebskette abgedeckt, so dass an zumindest einem Zahnkranz ein vollständiger Eingriffsschutz vorhanden ist. Es ist natürlich auch möglich, mittels des mindestens einen Abdeckelementes einen Eingriffsschutz an zwei Zahnkränzen bereitzustellen, und zwar jeweils an einem Zulauf und einem Ablauf der Antriebskette, so dass eine Sicherheit vor Beschädigungen oder Verletzungen an sämtlichen Positionen der Antriebskette vorhanden ist.

Erfindungsgemäß sind die Schutzelemente an dem mindestens einen Abdeckelement geführt. Hierfür kann an den Schutzelementen eine Aufnahme ausgebildet sein, in die mindestens eine Führungsleiste an dem Abdeckelement eingefügt ist. Die Führungsleiste kann dabei integral mit dem Abdeckelement ausgebildet sein oder als separates Bauteil an dem Abdeckelement fixiert sein. Vorzugsweise weisen die Schutzelemente an gegenüberliegenden Seitenwänden jeweils eine Aufnahme auf, insbesondere eine nutförmige Aufnahme, in die die Führungsleiste eingefügt ist. Dadurch können die Schutzelemente entlang der Führungsleiste verschiebbar geführt sein, so dass die Schutzelemente und auch die Kette gegen ein Durchhängen abgestützt werden können.

Damit auch im Bereich der Zahnkränze ein Verletzungsrisiko vermieden werden kann, kann das mindestens eine Abdeckelement die Zähne des Zahnkranzes zumindest in einem Bereich seitlich überdecken, in dem die Antriebskette nicht den Zahnkranz umschlingt.

In einer weiteren Ausgestaltung sind mindestens zwei Abdeckelemente vorgesehen, wobei ein erstes Abdeckelement einen ersten Zahnkranz und ein zweites Abdeckelement einen zweiten Zahnkranz zumindest bereichsweise überdeckt. Die beiden Abdeckelemente können dabei in der Länge relativ zueinander verstellbar ausgebildet sein, insbesondere verschiebbar. Dadurch kann bei einer Änderung des Abstandes zwischen den zwei Zahnkränzen eine Anpassung der Position der Abdeckelemente vorgenommen werden, so dass die Schutzabdeckung flexibel für unterschiedliche Fahrradgrößen eingesetzt werden kann.

Vorzugsweise ist jedes Schutzelement an einem Kettenglied fixierbar, insbesondere kann es an einem Kettenglied verrastbar sein. Dadurch kann ein leichtgängiges Bewegen der Schutzelemente zusammen mit der Antriebskette erfolgen, wobei die einzelnen Schutzelemente einander vorzugsweise so überdecken, dass auch bei der Umlenkung entlang eines Zahnkranzes ein Eingriff zu dem Zahnkranz sicher verhindert wird.

An einem unteren Kettenstrang der Antriebskette kann diese zwischen zwei Zahnkränzen durch die Schutzelemente gestützt sein, die entlang einer Führungsleiste verschiebbar sind. Dadurch wird ein Durchhängen der Antriebskette an dem unteren Antriebsstrang zumindest reduziert.

Die Erfindung wird nachfolgend anhand eines Ausführungsbeispiels mit Bezug auf die beigefügten Zeichnungen näher erläutert. Es zeigen:

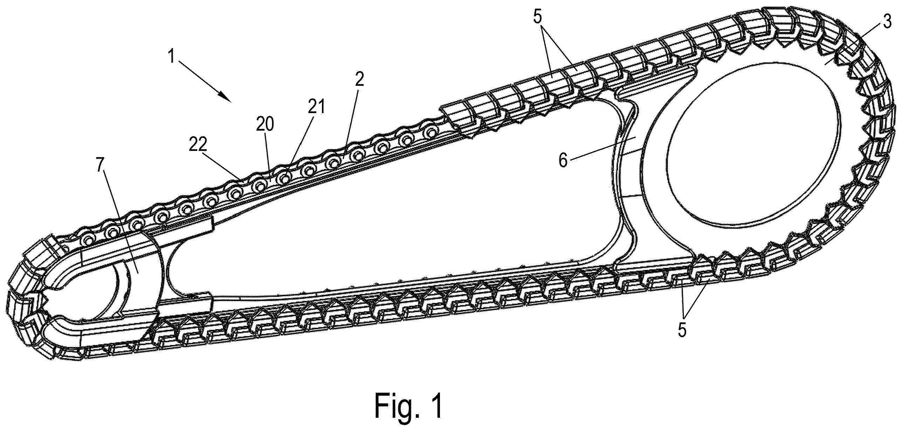

- Figur 1: eine perspektivische Ansicht einer Schutzabdeckung für eine Antriebskette;
- Figur 2: eine Ansicht der Schutzabdeckung der Figur 1 ohne Schutzelemente;

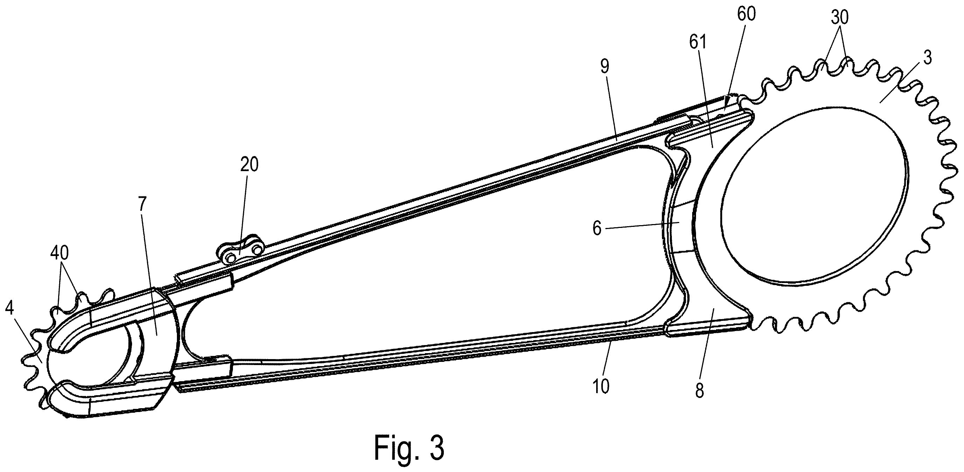

- Figur 3: eine Ansicht der Schutzabdeckung der Figur 1 ohne Antriebskette und Schutzelemente;
- Figur 4: eine Seitenansicht der stationären Abdeckelemente der Schutzabdeckung der Figur 1;
- Figur 5: eine perspektivische Ansicht der stationären Abdeckelemente;
- Figur 6: eine Detailansicht der Abdeckelemente der Figur 5;
- Figur 7: eine perspektivische Ansicht eines Schutzelementes der Schutzabdeckung der Figur 1, und

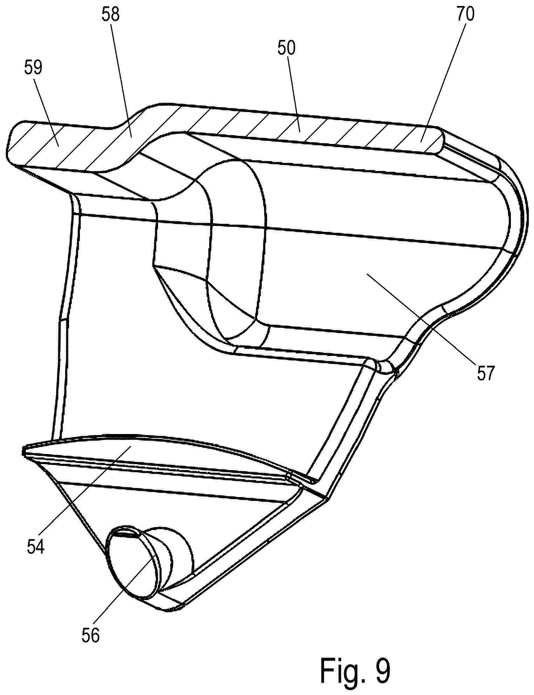

- Figuren 8 und 9: zwei Ansichten des Schutzelementes der Figur 7.

Eine Schutzabdeckung 1 für eine Antriebskette 2 wird insbesondere an einem Fahrrad montiert. Die Antriebskette 2 ist zwischen einem vorderen größeren Zahnkranz 3 und einem hinteren kleineren Zahnkranz 4 geführt, wobei die Größe der Zahnkränze 3 und 4 und der Abstand der Zahnkränze 3 und 4 relativ zueinander weiteren Bereichen variiert werden kann. Um die Antriebskette 2 vor einer Verschmutzung zu schützen und die Sicherheit zu erhöhen, sind eine Vielzahl von Schutzelementen 5 vorgesehen, die zusammen mit der Antriebskette 2 bewegt werden und diese U-förmig umgreifen. An einem Innenbereich sind die Schutzelemente 5 offen ausgebildet, damit einzelne Zähne 30 an dem Zahnkranz 3 und Zähne 40 an dem Zahnkranz 4 in Eingriff mit der Antriebskette 2 gelangen können.

Die Antriebskette 2 umfasst einzelne Kettenglieder 20, die über Bolzen 21 miteinander verbunden sind, wobei in Zwischenräume 22 zwischen zwei Bolzen 21 die Zähne 30 und 40 eingreifen.

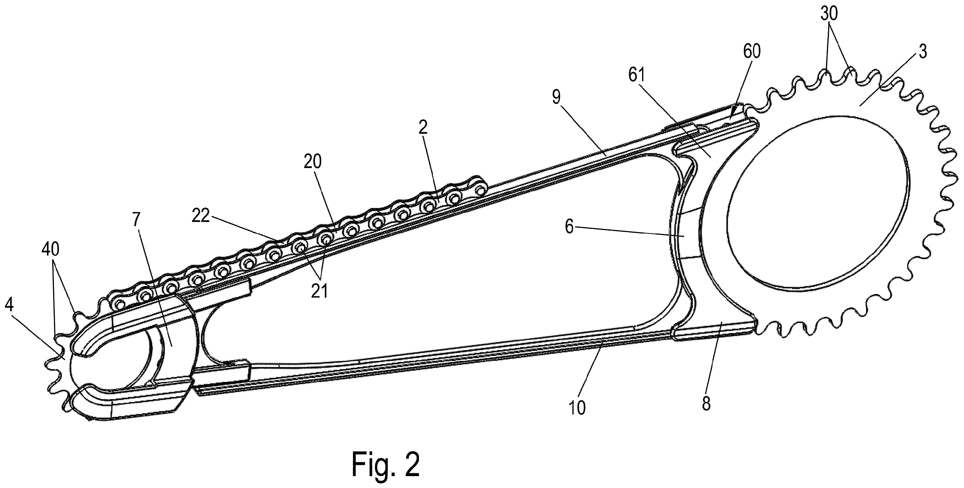

Wir in Figur 2 gezeigt ist, befindet sich an dem größeren Zahnkranz 3 ein Abdeckelement 6, das die Zähne 30 in dem Bereich seitlich überdeckt, in dem die Antriebskette 2 nicht um den Zahnkranz 3 geführt ist. In diesem Bereich umgibt das Abdeckelement 6 die Zähne 30 im Wesentlichen U-förmig, wobei die Antriebskette 2 an einem oberen Einlauf 60 zu den Zähnen 30 des Zahnkranzes 3 geführt ist und dabei durch seitliche Wände 61 des Abdeckelementes 6 verhindert wird, dass Gegenstände oder Körperteile in den keilförmigen Spalt zwischen dem Zahnkranz 3 und der Antriebskette 2 gelangen. Die Wand 61 ist dabei an einem Zulauf der Antriebskette 2 zu dem Zahnkranz 3 angeordnet, während weitere Wände 8 des Abdeckelementes 6 an einem Ablauf die Antriebskette 2 und den Zahnkranz 3 überdecken, und auch ein keilförmiger Spalt in diesem Bereich gesichert ist, so dass keine Gegenstände oder Körperteile eingefügt werden können. Gerade bei Fahrrädern, die eine Rückwärtsbewegung des Zahnkranzes 3 zulassen, kann somit sowohl am Zulauf als auch am Ablauf der Antriebskette 2 von dem Zahnkranz 3 eine Verletzung oder Beschädigung sicher vermieden werden.

An dem rückwärtigen kleineren Zahnkranz 4 ist ebenfalls ein Abdeckelement 7 vorgesehen, die die Zähne 40 des Zahnkranzes 4 zumindest in einem Bereich überdeckt, in dem die Antriebskette 2 nicht den Zahnkranz 4 umschlingt. Zudem ist das Abdeckelement 7 so angeordnet, dass ein keilförmiger Spalt zwischen der Antriebskette 2 und dem Zahnkranz 4 sowohl an einem Zulauf als auch an einem Ablauf seitlich überdeckt ist.

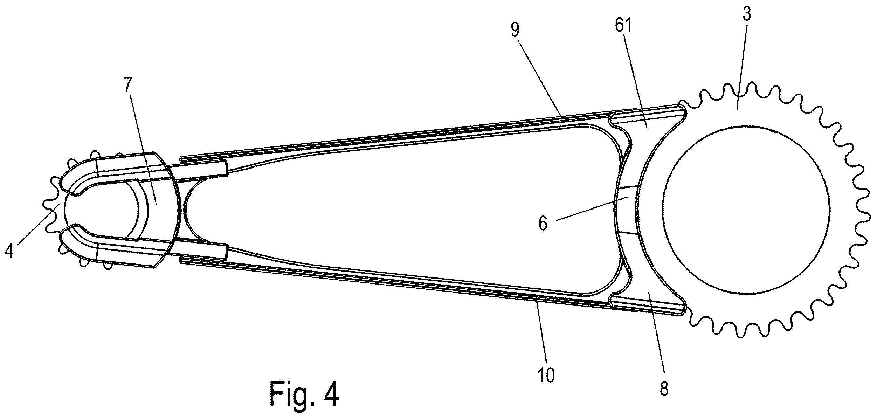

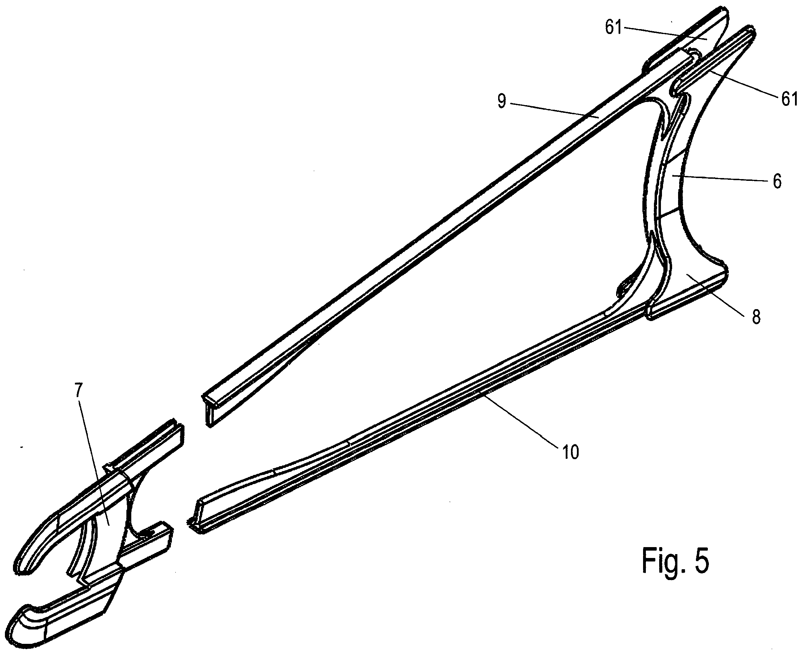

In den Figuren 4 bis 6 sind die beiden Abdeckelemente 6 und 7 ohne die Antriebskette 2 gezeigt. Die Abdeckelemente 6 und 7 werden innerhalb der Antriebskette 2 montiert und dann durch die Antriebskette 2 und/oder die Zahnkränze 3 und 4 gehalten. Um die Schutzelemente 5 im Wesentlichen linear zu führen, weist die Schutzabdeckung eine obere Führungsleiste 9 und eine untere Führungsleiste 10 auf, die integral mit dem Abdeckelement 6 ausgebildet sind, aber auch als gesonderte Bauteile an einem der Abdeckelemente 6 oder 7 fixiert werden können. Zudem können die Führungsleisten 9 oder 10 auch an dem hinteren Abdeckelement 7 fixiert sein. Die Führungsleiste 9 und die Führungsleiste 10 dienen zur Führung der Schutzelemente 5, wobei die Führungsleisten 9 und 10 im Querschnitt T-förmig ausgebildet sind und in eine entsprechende Aufnahme an den Schutzelementen 5 eingreifen. Die untere Führungsleiste 10 verhindert dabei ein Durchhängen der Antriebskette 2, da die Schutzelemente 5 an der Führungsleiste 10 hängend gehalten sind.

Die Abdeckelemente 6 und 7 können in der Länge relativ zueinander verstellt werden, wobei hierfür an der oberen Führungsleiste 9 endseitig ein Steg 12 ausgebildet ist, der in eine Nut 14 einer leistenförmigen Aufnahme 13 angeordnet ist. Das Abdeckelement 7 weist eine zweite Aufnahme 15 auf, in die ein Steg 16 an der unteren Führungsleiste 10 eingefügt ist. Dadurch können die Abdeckelemente 6 und 7 relativ zueinander verschoben werden, wie dies durch den Doppelpfeil schematisch gezeigt ist, ohne dass eine Verbindung zwischen den Abdeckelementen 6 und 7 unterbrochen wird. Statt einer nutförmigen Aufnahme 13 oder 15 können auch andere Halteeinrichtungen zur Verbindung der Abdeckelemente 6 und 7 und zum Verstellen der Länge eingesetzt werden.

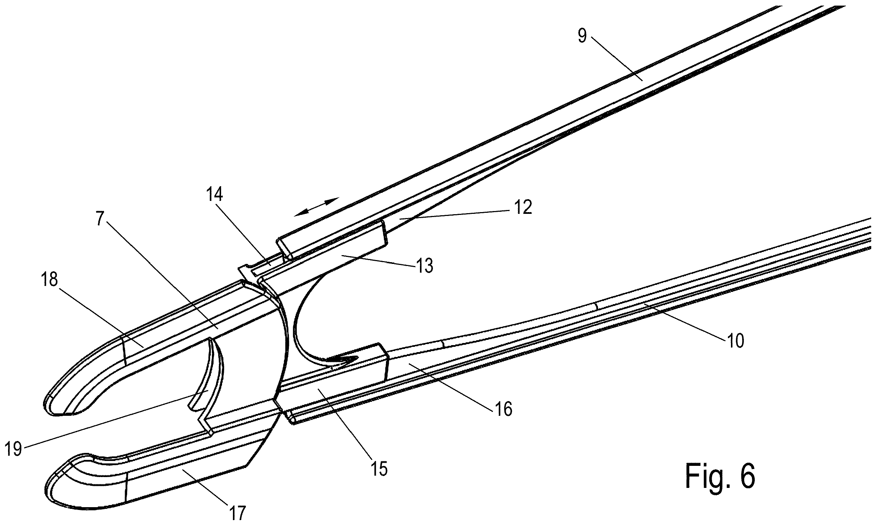

Ferner ist in Figur 6 erkennbar, dass das Abdeckelement 7 eine schlitzförmige Aufnahme 19 ausbildet, das den Zahnkranz 4 in dem Bereich überdeckt, in dem die Antriebskette 2 nicht an dem Zahnkranz 4 anliegt. Das Abdeckelement 7 weist ferner zwei Ausleger 17 und 18 auf, die den Zahnkranz 4 seitlich überdecken, wobei die Ausleger 17 und 18 endseitig nicht aneinander anliegen, so dass das Abdeckelement 7 für unterschiedlich große Zahnkränze 4 einsetzbar ist. Es ist auch möglich, das Abdeckelement 7 ringförmig auszubilden.

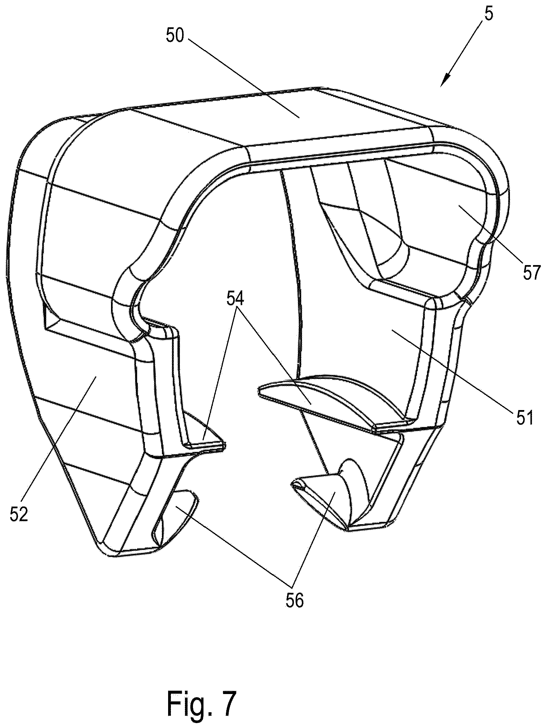

In Figur 7 ist ein Schutzelement 5 gezeigt, das an einem Kettenglied 20 festlegbar ist. Das Schutzelement 5 ist im Wesentlichen U-förmig ausgebildet und weist eine Außenabdeckung 50 auf, die jeweils am äußeren Umfang der umlaufenden Antriebskette 2 angeordnet ist. Von der Außenabdeckung 50 erstrecken sich zwei Seitenwände 51 und 52 im Wesentlichen senkrecht zu einem Innenbereich hin, wobei an den Seitenwänden 51 und 52 nach innen gerichtete Vorsprünge 54 und 56 vorgesehen sind. An dem Schutzelement 5 wird somit eine erste Kammer 53 gebildet, die von den beiden Seitenwänden 51, 52, der Außenabdeckung 50 sowie den Vorsprüngen 54 begrenzt wird und zur Aufnahme der Kettenglieder 20 dient. Die Kettenglieder 20 können dabei mit dem hervorstehenden Bolzen 21 in einer Aufnahme 57 angeordnet werden, so dass das Schutzelement 5 im Wesentlichen formschlüssig an dem Kettenglied 20 gehalten ist.

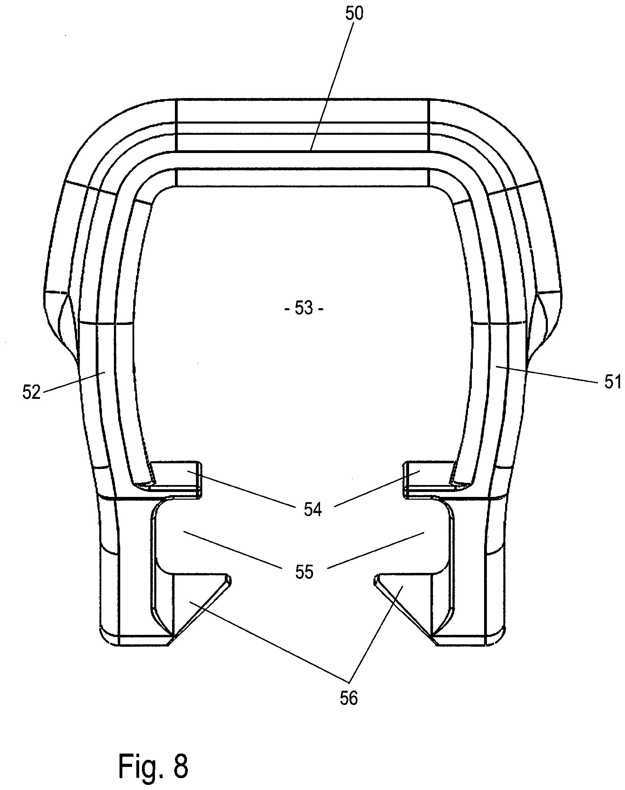

Benachbart zu der Kammer 53 ist eine zweite kanalförmige Kammer 55 vorgesehen, wie dies insbesondere in Figur 8 gezeigt ist. Diese zweite Kammer 55 erstreckt sich zwischen den beabstandeten Vorsprüngen 54 und 56 und den Seitenwänden 51 und 52. Dabei begrenzen die Vorsprünge 54 und 55 eine U-förmige Aufnahme, in die jeweils ein Steg einer Führungsleiste 9 oder 10 einfügbar ist. Dadurch können die Schutzelemente 5 jeweils an den Führungsleisten 9 oder 10 geführt werden. Gerade bei der unteren Führungsleiste 10 kann somit über die Schutzelemente 5 ein Durchhängen der Antriebskette 2 reduziert werden.

Zur Montage der Schutzelemente 5 können diese durch Aufbiegen der Seitenwände 51 und 52 montiert werden, gegebenenfalls auch verrastet werden, und sind somit unverlierbar an der Antriebskette 2 fixiert. Um im Bereich der Zahnkränze 3 und 4 eine Spaltbildung zwischen benachbarten Schutzelementen 5 zu vermeiden, ist die Außenabdeckung 50 gestuft ausgebildet, so dass eine Stufe 58 vorgesehen ist, an die sich ein Endabschnitt 59 anschließt, der unter einem benachbarten Endabschnitt 70 eines benachbarten Schutzelementes 5 angeordnet ist. Dadurch gibt es zwischen benachbarten Schutzelementen 5 eine gewisse Überdeckung durch die Endabschnitte 70 und 59, so dass die Schutzelemente 5 auch dann einen Eingriffsschutz bilden, wenn sie an den Zahnkränzen 3 und 4 umschlingend angeordnet sind.

In dem dargestellten Ausführungsbeispiel können die Schutzelemente 5 sowie die Abdeckelemente 6 und 7 als Kunststoffteile hergestellt sein. Dabei können statt zwei Abdeckelementen 6 und 7 auch mehr als zwei Abdeckelemente oder auch nur ein einziges Abdeckelement vorgesehen werden. Zudem kann die Teilung der Abdeckelemente 6 und 7 auch parallel zur Längsrichtung verlaufen, also in der durch die Antriebskette 2 gebildeten Ebene.

Statt der einzelnen Schutzelemente 5 können auch rohrförmige Schutzelemente eingesetzt werden, die zusammen mit der Antriebskette 2 bewegbar sind.

Die Form der Abdeckelemente 6 und 7 kann zudem an die Form der Zahnkränze 3 oder 4 angepasst werden.

### Bezugszeichenliste

- 1: Schutzabdeckung
- 2: Antriebskette
- 3: Zahnkranz
- 4: Zahnkranz
- 5: Schutzelement
- 6: Abdeckelement
- 7: Abdeckelement
- 8: Wand
- 9: Führungsleiste
- 10: Führungsleiste
- 12: Steg
- 13: Aufnahme
- 14: Nut
- 15: Aufnahme
- 16: Steg
- 17: Ausleger
- 18: Ausleger
- 19: Aufnahme
- 20: Kettenglied
- 21: Bolzen
- 22: Zwischenraum
- 30: Zahn
- 40: Zahn
- 50: Außenabdeckung
- 51: Seitenwand
- 52: Seitenwand
- 53: Kammer
- 54: Vorsprung
- 55: Kammer
- 56: Vorsprung
- 57: Aufnahme
- 58: Stufe
- 59: Endabschnitt
- 60: Einlauf
- 61: Wand
- 70: Endabschnitt

## Patentansprüche

1. Antrieb, insbesondere für ein Fahrrad, mit einem ersten Zahnkranz (3), einem zweiten Zahnkranz (4), einer um die zwei Zahnkränze (3, 4) geführten Antriebskette (2) und einer Schutzabdeckung (1) für die Antriebskette (2), wobei die Schutzabdeckung (1) eine Vielzahl von Schutzelementen (5) aufweist, die die Antriebskette (2) umgreifen und zusammen mit der Antriebskette (2) bewegbar sind, wobei die Schutzabdeckung (1) mindestens ein stationäres Abdeckelement (6, 7) aufweist, das einen Spalt zwischen einem der Zahnkränze (3, 4) und der Antriebskette (2) abdeckt, **dadurch gekennzeichnet, dass** die Schutzelemente (5) an dem mindestens einen Abdeckelement (6, 7) geführt sind.

2. Antrieb nach Anspruch 1, **dadurch gekennzeichnet, dass** das mindestens eine Abdeckelement (6, 7) sowohl einen Spalt an einem Zulauf der Antriebskette (2) auf den Zahnkranz (3, 4) als auch einen Spalt an einem Ablauf der Antriebskette (2) von dem Zahnkranz (3, 4) abdeckt.

3. Antrieb nach Anspruch 1 oder 2, **dadurch gekennzeichnet, dass** an den Schutzelementen (5) eine Aufnahme (55) ausgebildet ist, in die mindestens eine Führungsleiste (9, 10) an dem Abdeckelement (6, 7) eingefügt ist.

4. Antrieb nach Anspruch 3, **dadurch gekennzeichnet, dass** die Schutzelemente (5) an gegenüberliegenden Seitenwänden (51, 52) jeweils eine Aufnahme (55) aufweisen, in die die Führungsleiste (9, 10) eingefügt ist.

5. Antrieb nach einem der vorhergehenden Ansprüche, **dadurch gekennzeichnet, dass** das mindestens eine Abdeckelement (6, 7) die Zähne (30, 40) des Zahnkranzes (3, 4) zumindest in einem Bereich seitlich überdeckt, in dem die Antriebskette (2) nicht den Zahnkranz (3, 4) umschlingt.

6. Antrieb nach einem der vorhergehenden Ansprüche, **dadurch gekennzeichnet, dass** zwei Abdeckelemente (6, 7) vorgesehen sind und ein erstes Abdeckelement (6) den ersten Zahnkranz (3) und ein zweites Abdeckelement (7) den zweiten Zahnkranz (4) zumindest bereichsweise überdeckt.

7. Antrieb nach Anspruch 6, **dadurch gekennzeichnet, dass** die beiden Abdeckelemente (6, 7) in der Länge verstellbar zueinander ausgebildet sind und insbesondere ineinander schiebbar sind.

8. Antrieb nach einem der vorhergehenden Ansprüche, **dadurch gekennzeichnet, dass** jedes Schutzelement (5) an einem Kettenglied (20) fixierbar ist, insbesondere an einem Kettenglied (20) verrastbar ist.

9. Antrieb nach einem der vorhergehenden Ansprüche, **dadurch gekennzeichnet, dass** die Antriebskette (2) zwischen den zwei Zahnkränzen (3, 4) in einem unteren Kettenstrang durch die Schutzelemente (5) gestützt ist, die entlang einer Führungsleiste (10) verschiebbar sind.

10. Antrieb nach einem der vorhergehenden Ansprüche, **dadurch gekennzeichnet, dass** die Schutzelemente (5) und/oder das mindestens eine Abdeckelement (6, 7) aus Kunststoff hergestellt sind.

## Claims

1. A drive, in particular for a bicycle, comprising a first sprocket (3), a second sprocket (4), a drive chain (2) guided around the two sprockets (3, 4) and a protective cover (1) for the drive chain (2), said protective cover (1) having a plurality of protective elements (5), which encompass the drive chain (2) and are movable together with the drive chain (2), whereby at least one stationary cover element (6, 7) is provided, which covers a gap between a sprocket (3, 4) and the drive chain (2), **characterized in that** the protective elements (5) are guided at the at least one cover element (6, 7).

2. The drive according to claim 1, **characterized in that** the at least one cover element (6, 7) covers both a gap at an intake of the drive chain (2) onto the sprocket (3, 4) and also a gap at an outlet of the drive chain (2) from the sprocket (3, 4).

3. The drive according to claim 1 or 2, **characterized in that** a receptacle (55) is formed at the protective elements (5), into which at least one guide strip (9, 10) on the cover element (6, 7) is inserted.

4. The drive according to claim 3, **characterized in that** the protective elements (5) each have a receptacle (55), into which the guide strip (9, 10) is inserted, on opposing side walls (51, 52).

5. The drive according to any one of the preceding claims, **characterized in that** the at least one cover element (6, 7) laterally overlaps the teeth (30, 40) of the sprocket (3, 4) at least in a region in which the drive chain (2) does not wrap around the sprocket (3, 4).

6. The drive according to any one of the preceding claims, **characterized in that** two cover elements (6, 7) are provided and a first cover element (6) at least regionally overlaps a first sprocket (3) and a second cover element (7) at least regionally overlaps a second sprocket (4).

7. The drive according to claim 6, **characterized in that** the two cover elements (6, 7) are designed as adjustable in relation to one another in length and in particular are displaceable one inside another.

8. The drive according to any one of the preceding claims, **characterized in that** each protective element (5) is fixable on a chain link (20), in particular is lockable on a chain link (20).

9. The drive according to any one of the preceding claims, **characterized in that** the drive chain (2) is supported between two sprockets (3, 4) in a lower chain strand by the protective elements (5), which are displaceable along a guide strip (10).

10. The drive according to any one of the preceding claims, **characterized in that** the protective elements (5) and/or the at least one cover element (6, 7) are produced from plastic.

## Revendications

1. Système d'entraînement en particulier pour une bicyclette comportant une première couronne dentée (3), une seconde couronne dentée (4), une chaîne d'entraînement (2) guidée autour des deux couronnes dentées (3, 4) et un recouvrement de protection (1) de la chaîne d'entraînement (2), le recouvrement de protection (1) comprenant un ensemble d'éléments de protection (5) qui entourent la chaîne d'entraînement (2) et sont mobiles conjointement à celle-ci, le recouvrement de protection (1) comprenant au moins un élément de recouvrement stationnaire (6, 7) qui recouvre un intervalle situé entre l'une des couronnes dentées (3, 4) et la chaîne d'entraînement (2),
**caractérisé en ce que**
les éléments de protection (5) sont guidés sur l'élément de recouvrement (6, 7).

2. Système d'entraînement conforme à la revendication 1,
**caractérisé en ce que**
l'élément de recouvrement (6, 7) recouvre un intervalle situé au niveau de l'entrée de la chaîne d'entraînement (2) sur la couronne dentée (3, 4) et également un intervalle situé au niveau de la sortie de la chaîne d'entraînement (2) de la couronne dentée (3, 4).

3. Système d'entraînement conforme à la revendication 1 ou 2,
**caractérisé en ce que**
sur les éléments de protection (5) est formé un logement (55) dans lequel au moins une baguette de guidage (9, 10) est insérée sur l'élément de recouvrement (6, 7).

4. Système d'entraînement conforme à la revendication 3,
**caractérisé en ce que**
les éléments de protection (5) comportent respectivement, sur des parois latérales opposées (51, 52) un logement (55) dans lequel est insérée la baguette de guidage (9, 10).

5. Système d'entraînement conforme à l'une des revendications précédentes,
**caractérisé en ce que**
l'élément de recouvrement (6, 7) recouvre latéralement les dents (30, 40) de la couronne dentée (3, 4) au moins dans une zone dans laquelle la chaîne d'entraînement (2) n'entoure pas la couronne dentée (3, 4).

6. Système d'entraînement conforme à l'une des revendications précédentes,
**caractérisé en ce qu'**
il est prévu deux éléments de recouvrement (6, 7) et un premier élément de recouvrement (6) recouvre au moins par zones la première couronne dentée (3) tandis qu'un second élément de recouvrement (7) recouvre au moins par zones la seconde couronne dentée (4).

7. Système d'entraînement conforme à la revendication 6,
**caractérisé en ce que**
les deux éléments de recouvrement (6, 7) sont réalisés de façon à permettre de régler leur longueur l'un par rapport à l'autre et en particulier peuvent coulisser l'un dans l'autre.

8. Système d'entraînement conforme à l'une des revendications précédentes,
**caractérisé en ce que**
chaque élément de protection (5) peut être fixé sur un organe de la chaine (20), en particulier être encliqueté sur un organe de la chaîne (20).

9. Système d'entraînement conforme à l'une des revendications précédentes,
**caractérisé en ce que**
la chaîne d'entraînement (2) s'appuie entre les deux couronnes dentées (3, 4) dans la ligne de chaîne inférieure par l'intermédiaire des éléments de protection (5) qui peuvent coulisser le long d'une baguette de guidage (10).

10. Système d'entraînement conforme à l'une des revendications précédentes,
**caractérisé en ce que**
les éléments de protection (5) et/ou l'élément de recouvrement (6, 7) est (sont) réalisé(s) en matériau synthétique.
